# EUROPÄISCHE PATENTSCHRIFT

(11) **EP 0 921 365 B1**
(45) Veröffentlichungstag und Bekanntmachung des Hinweises auf die Patenterteilung: **14.01.2004**
(21) Anmeldenummer: 98119902.9
(22) Anmeldetag: 21.10.1998
(51) Int. Cl.: F25D 3/02, F28D 20/02, B60H 1/32, F25D 3/00, B60H 1/00

(54) **Kältespeicher, insbesondere für ein Kraftfahrzeug**
Cold accumulator, particularly for a motor vehicle
Accumulateur de froid, en particulier pour un véhicule automobile

(30) Priorität: 03.12.1997 DE 19753601
(43) Veröffentlichungstag der Anmeldung: 09.06.1999
(73) Patentinhaber: Behr GmbH & Co., 70469 Stuttgart (DE)
(72) Erfinder: Feuerecker, Günther, Dr. rer. nat., 70567 Stuttgart (DE)

(56) Entgegenhaltungen:
- EP-A- 0 056 591
- EP-A- 0 306 202
- EP-A- 0 496 067
- WO-A-89/09375
- FR-A- 2 536 155
- US-A- 4 054 141
- US-A- 4 221 259
- US-A- 4 268 558
- US-A- 4 993 481
- US-A- 5 305 821
- US-A- 5 314 005
- US-A- 5 644 929

## Beschreibung

Die Erfindung betrifft einen Kältespeicher, insbesondere für ein Kraftfahrzeug, gemäß dem Oberbegriff des Anspruchs 1.

Bei der Kraftfahrzeugklimatisierung gibt es trotz leistungsstarker Klimaanlagen noch Komfortdefizite, denn bei hohen Außentemperaturen und/oder starker Sonneneinstrahlung ist der Fahrzeuginnenraum stark aufgeheizt. Daher ist nach dem Start des Fahrzeuges eine gewisse Zeitspanne notwendig, um im Fahrzeuginnenraum eine angenehme Temperatur zu erreichen. Zur Reduzierung dieser Zeitspanne und zur schnelleren Abkühlung des Fahrzeuginnenraums kommen Kältespeicher zum Einsatz, die kurzzeitig sehr hohe Kälteleistungen abgeben können.

Bei der Konstruktion derartiger Kältespeicher sind im wesentlichen drei Kernprobleme zu lösen. Es muß ein guter Wärmeübergang von einem Speichermedium an ein Wärmeträgermedium gegeben sein. Das Speichermittel, in der Regel Wasser, sollte nach Gefrieren nur gering unterkühlt werden und eine Volumenausdehnung des Speichermediums bei Temperaturänderung muß aufgefangen werden. Insbesondere die Volumenänderung mit der Temperatur - bei Wasser ist die Ausdehnung beim Gefrieren problematisch - ist von zentraler Bedeutung, denn die Volumenausdehnung kann schnell zu einer Beschädigung oder gar Zerstörung des Speichers führen.

Kältespeicher werden bereits in der stationären Klimatechnik eingesetzt. Dort begegnet man der Gefahr des Berstens des Speichers beim Gefrieren des Speichermediums aufgrund der Volumenausdehnung durch entsprechend großvolumige Behälter, die nur teilweise mit dem Speichermedium beladen sind. Diese Konzepte sind in der Kraftfahrzeugtechnik wegen des Platzmangels im Fahrzeug und der damit einhergehenden Forderung nach kompakter Bauweise, sowie wegen extremen klimatischen Bedingungen, denen ein Fahrzeug ausgesetzt sein kann und denen der Speicher standhalten muß, nicht anwendbar.

Es ist die US 4,993,481 bekannt geworden, die eine thermische Speichereinheit offenbart.

Ausgehend von diesem Stand der Technik ist es Aufgabe der Erfindung einen verbesserten Kältespeicher bereitzustellen, der insbesondere für den Einsatz in einem Kraftfahrzeug geeignet ist und der bei einem kleinen Bauraum Volumenänderungen des Speichermediums aufnehmen kann und der kostengünstig herstellbar ist.

Diese Aufgabe wird gelöst durch einen Kältespeicher mit den Merkmalen des Anspruchs 1.

Erfindungsgemäß ist das Speichermedium durch einen Speichermediumträger gehalten, der aus einem saugfähigen Material besteht. Weiter ist das Speichermedium in seinem flüssigen Zustand vollständig von dem Speichermediumträger aufgesaugt. Durch das saugfähige Material können Volumenänderungen in ausreichendem Maß kompensiert werden, ohne das der Kältespeicher beschädigt wird. Als saugfähiges Material kann eine Vielzahl von Stoffen eingesetzt werden, die das Speichermedium zu Volumenteilen zwischen etwa 30 % und etwa 90 % durch eine beliebige Art der Wechselwirkung, beispielsweise hydrophile, kapillare oder kolloidale, aufnehmen. Es verbleibt stets ein Restvolumen des saugfähigen Materials, das die Volumenänderungen des aufgesaugten Speichermediums kompensieren kann.

Damit ist ein Kältespeicher geschaffen, der einen kleinen Bauraum aufweisen kann, da bereits der Speichermediumträger selbst die Volumenänderungen aufnehmen kann. Desweiteren ist der erfindungsgemäße Kältespeicher sehr kostengünstig herstellbar. Da das Speichermedium von dem Speichermediumträger aufgesaugt ist, ist ein "Schwappen" des Speichermediums in dem Gehäuse des Kältespeichers und ein damit verbundenes und als unangenehm empfundenes "Schwappgeräusch" vermieden.

Ein weiterer Vorteil ist, daß der erfindungsgemäße Kältespeicher nach Art bekannter und im Einsatz bewährter Wärmetauscher ausgebildet sein kann und das Material des Speichermediumträgers lediglich nachträglich beispielsweise zwischen Rohre des Wärmetauschers eingelagert werden kann. Damit können bekannte, erprobte und optimierte Verfahren zur Herstellung der Wärmetauscher sowie bekannte Wärmetauscherkonstruktionen eingesetzt werden. So können beispielsweise Rundrohr- oder Flachrohrwärmetauscherkonstruktionen, wie sie im Fahrzeugbau hinlänglich bekannt sind, eingesetzt werden.

Bevorzugt ist das Speichermedium Wasser und der Speichermediumträger besteht aus einem Gewebe, Gewirk oder Vlies. Derartige Strukturen, insbesondere Vliesstoffe werden beispielsweise in Hygieneartikeln, wie Wegwerfwindeln oder Inkontinenzprodukten, seit langem eingesetzt. Sie sind äußerst kostengünstig und besitzen ein hohes Flüssigkeitsaufnahmevermögen, wobei diese Stoffe selbst bei maximaler Beladung mit dem Speichermedium Volumenänderungen des Speichermediums ausreichend kompensieren können.

Der Schmelzpunkt von Wasser beträgt 0°C. Hinsichtlich einer optimalen Beund Entladestrategie für den erfindungsgemäßen Speicher können höhere Schmelztemperaturen vorteilhaft sein. Als Speichermedium können dann beispielsweise kongruent schmelzende Hydrate von Salzen, Säuren oder Laugen, wässrige Lösungen von Salzgemischen oder Clathrate eingesetzt werden.

Zur Erhöhung der Aufnahmekapazität ist der Speichermediumträger aus einem Fasermaterial gebildet, beispielsweise aus Zellulosefasern. Das Speichermedium kann dann durch Kapillarwirkung in den Faserzwischenräumen und wenn die Fasern hydrophile Eigenschaften aufweisen, auch von den Fasern selbst aufgesaugt werden.

Besonders bevorzugt weist der Speichermediumträger hochabsorbierende Materialien, wie Hydrogele, Kolloide oder sogenannte superabsorbierende Polymere oder dergleichen auf. Derartige Materialien, beispielsweise ein wasserquellbares Polymer, wie es aus der DE 4116428 bekannt ist, werden bereits in Hygieneartikeln eingesetzt und erhöhen das Speichermediumaufnahmevermögen um ein Vielfaches. Diese Materialien sind auch nach Umweltaspekten unbedenklich.

Wenn der Speichermediumträger als Pulver oder rieselfähige Substanz ausgebildet ist, ergeben sich Vorteile für den Fertigungsprozeß, da zuerst die Wärmetauscherstruktur, also die Rohre und Rippen, in bekannter und bewährter Weise gefertigt werden können und anschließend die Wärmetauscherstruktur mit dem Speichermediumträger befüllbar ist. Damit muß zur Herstellung des erfindungsgemäßen Speichers nicht ein vollständig neuer sondern lediglich ein zusätzlicher Fertigungsschritt eingefügt werden.

Zur verbesserten Wärmeleitung sind Rippen vorgesehen, die aus einem gut wärmeleitenden Material, beispielsweise Aluminium, bestehen.

Bevorzugt bilden die Rippen und der Speichermediumträger eine Schichtstruktur, die mit den Leitungsmitteln verbunden ist. Damit ist ein optimaler Wärmeübertrag zwischen dem in dem Speichermediumträger enthaltenden Speichermedium und dem in den Leitungsmitteln fließenden Wärmeträgermedium gewährleistet.

Im folgenden wird die Erfindung anhand von Ausführungsbeispielen unter Bezugnahme auf die Zeichnung im einzelnen erläutert. In der Zeichnung zeigen:
- **Fig. 1**: einen Teil eines erfindungsgemäßen Kältespeichers einer ersten Ausführungsform;
- **Fig. 2**: eine weitere Ausführungsform des Kältespeichers;
- **Fig. 3**: einen Querschnitt entlang der Linie III-III aus Fig. 2.

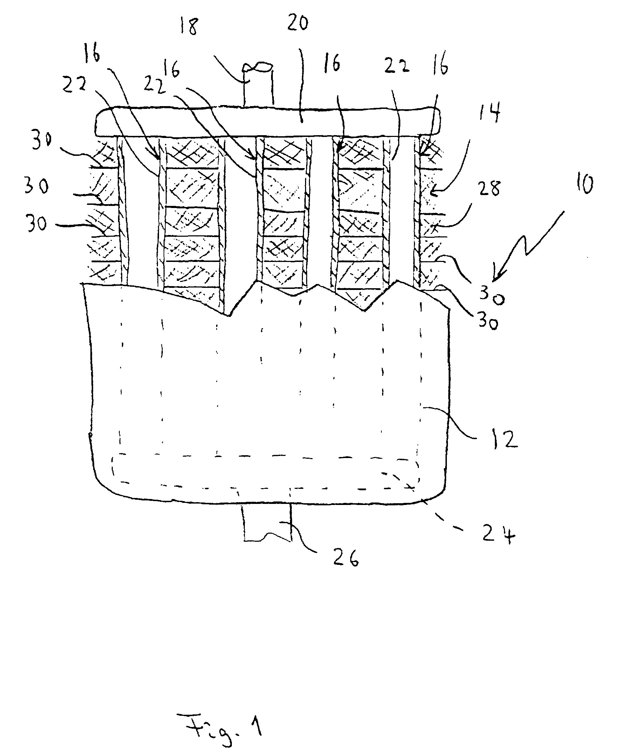

Ein in der Zeichnung dargestellter Kältespeicher 10 weist bevorzugt ein in **Fig. 1** lediglich angedeutetes Gehäuse 12 auf. Die Gehäusewände weisen eine Wärmeisolation auf, damit ein innerhalb des Gehäuses 12 befindliches, abgekühltes Speichermedium sich möglichst wenig aufgrund von Außeneinflüßen erwärmt. Der Kältespeicher 10 besteht weiter aus einem Speichermediumträger 14, der in wärmeleitender Verbindung mit Leitungsmitteln 16 steht. Die Leitungsmittel 16 führen ein Wärmeträgermedium, das damit in Wärmetausch mit dem Speichermedium steht, zum Laden und Entladen des Kältespeichers 10, wie weiter unten ausgeführt ist.

In einem in **Fig. 1** dargestellten ersten Ausführungsbeispiel ist der Kältespeicher 10 nach Art eines Rundrohrwärmetauschers ausgebildet. Das Wärmeträgermedium fließt von einem Einlaß 18 und einem Verteiler 20 durch die als Rundrohre 22 ausgebildeten Leitungsmittel 16 zu einem Sammelrohr 24 und zu einem Auslaß 26. Zwischen den Rundrohren 22 befindet sich der Speichermediumträger 14, der aus einem saugfähigen Material besteht und in den das Speichermedium, vorzugsweise Wasser, vollständig aufgesaugt ist.

Der Speichermediumträger 14 besteht bevorzugt aus einem Gewebe, Gewirk oder Vlies, wobei ein Faservlies 28 aus Zellstofffasem besonders bevorzugt ist. Zur Erhöhung der Speichermediumaufnahmekapazität sind in dem Faservlies 28 hochabsorbierende Materialien, wie Hydrogele oder dergleichen eingelagert. Derartige Materialien werden auf dem Gebiet der Hygieneartikel, in denen sie seit langem eingesetzt werden, auch Superabsorbentien genannt.

Um den Faservlies 28 stabil zwischen den Rundrohren 22 zu halten und um die thermische Verbindung zwischen dem das Speichermedium enthaltenden Faservlies 28 und den Rundrohren 22 zu erhöhen, sind Rippen 30 aus gut wärmeleitenden Material, beispielsweise Aluminium, vorgesehen. Die Rippen 30 sind im wesentlichen als Platten ausgebildet, die senkrecht zu den Rundrohren 22 angeordnet und mit diesen verlötet sind. Zwischen jeweils zwei Platten befindet sich eine Lage des Faservlieses 28, so daß die Rippen 30 und der Speichermediumträger 14 eine Schichtstruktur bilden.

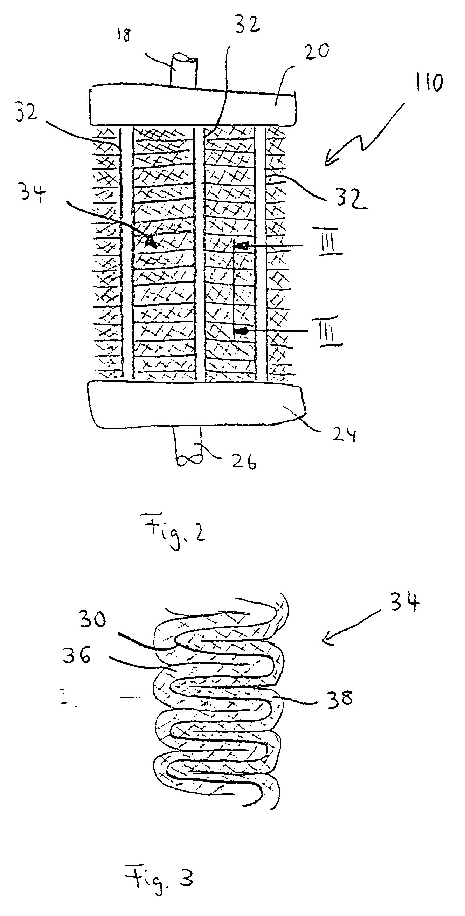

In einem zweiten in **Fig. 2** und **3** dargestellten Ausführungsbeispiel ist der Kältespeicher 10 als Flachrohrwärmetauscher 110 ausgebildet. Zwischen Flachrohren 32 ist eine Schichtstruktur 34 angeordnet, wobei diese Struktur 34 aus drei Lagen aufgebaut ist und die Rippe 30 die mittlere Lage und zwei Faservlieslagen 36 und 38 des Speichermediumträgers 14 die äußeren Lagen bilden. Die Schichtstruktur 34 ist mäanderförmig gefaltet und jeweils zwischen zwei Flachrohren 32 derart angeordnet, so daß die Kanten der Rippen 30 mit den Flachrohren 32 kontaktiert sind. Es versteht sich, daß auch dieser Kältespeicher 110 bevorzugt ein isolierendes Gehäuse aufweist, das u. a. dazu dient, daß kein Speichermedium, also kein Wasser, aus dem Speichermediumträger 14 abtropfen, auslaufen oder verdunsten kann.

Zum Beladen des Kältespeichers 10, 110 kann als Wärmeträgermedium beispielsweise Sole dienen, die durch einen Verdampfer im Kältekreislauf einer Kraftfahrzeugklimaanlage gekühlt wurde. Dadurch wird das Speichermedium abgekühlt und gefriert. Zum Entladen des Kältespeichers 10, 110 wird durch entsprechende Verschaltung des Solekreises die im Verbraucher, beispielsweise einem Luft/Sole-Wärmetauscher, erwärmte Sole von dem kalten Speichermedium abgekühlt, wobei das Speichermedium schmilzt.

Es ist auch die Verwendung zweier getrennter Stoffkreise denkbar, von denen ein Kältemittelkreislauf zum Beladen und ein Solekreislauf zum Entladen des Speichers dient und für die jeweils voneinander getrennte Leitungsmittel vorzusehen sind. Der Solekreislauf zum Entladen kann auch eingespart werden, indem die abzukühlende Luft direkt durch die Leitungsmittel des Speichers geführt wird.

## Patentansprüche

1. Kältespeicher, insbesondere für ein Kraftfahrzeug, mit einem Speichermedium zum Speichern von Kälte und einem Speichermediumträger (14), der in wärmeleitender Verbindung mit Leitungsmitteln (16) für ein Wärmeträgermedium zum Laden bzw. Entladen des Kältespeichers (10) steht, **dadurch gekennzeichnet, daß** der Speichermediumträger (14) aus einem saugfähigen Material (28) besteht und das Speichermedium in seinem flüssigen Zustand vollständig von dem Speichermediumträger (14) aufgesaugt ist, wobei der Speichermediumträger (14) aus einem Fasermaterial besteht.

2. Kältespeicher nach Anspruch 1, **dadurch gekennzeichnet, daß** der Anteil des aufgesaugten Speichermediums etwa 30 Vol% bis 90 Vol% beträgt.

3. Kältespeicher nach Anspruch 1 oder 2, **dadurch gekennzeichnet, daß** das Speichermedium Wasser ist.

4. Kältespeicher nach einem der vorhergehenden Ansprüche, **dadurch gekennzeichnet, daß** der Speichermediumträger (14) aus einem Gewebe, Gewirk oder Vlies (28) besteht.

5. Kältespeicher nach Anspruch 4, **dadurch gekennzeichnet, daß** der Speichermediumträger (14) aus einem bevorzugt hydrophilen Fasermaterial besteht.

6. Kältespeicher nach einem der vorhergehenden Ansprüche, **dadurch gekennzeichnet, daß** der Speichermediumträger (14) hochabsorbierende Materialien, wie Hydrogele, Kolloide oder sogenannte superabsorbierende Polymere oder dergleichen aufweist.

7. Kältespeicher nach einem der vorhergehenden Ansprüche, **dadurch gekennzeichnet, daß** die wärmeleitende Verbindung durch Rippen (30) realisiert ist, die aus einem gut wärmeleitenden Material, beispielsweise Aluminium, bestehen.

8. Kältespeicher nach Anspruch 7, **dadurch gekennzeichnet, daß** die Rippen (30) und der Speichermediumträger (14) eine Schichtstruktur bilden.

9. Heizungs- oder Klimaanlage eines Kraftfahrzeuges mit einem Kältespeicher (10) nach einem der vorhergehenden Ansprüche.

## Claims

1. Cold storage system, in particular for a motor vehicle, with a storage medium for storing cold and a storage medium carrier (14) which is linked in a heat-conducting relationship to pipework (16) for a heat exchange medium for charging and discharging the cold storage system (10), **characterised in that** the storage medium carrier (14) is made from an absorbent material (28) and in its liquid state the storage medium is completely absorbed by the storage medium carrier (14), the storage medium carrier (14) being made from a fibre material.

2. Cold storage system as claimed in claim 1, **characterised in that** the proportion of the absorbed storage medium is approximately 30% by volume to 90% by volume.

3. Cold storage system as claimed in claim 1 or 2, **characterised in that** the storage medium is water.

4. Cold storage system as claimed in one of the preceding claims, **characterised in that** the storage medium carrier (14) is a woven fabric, knitted fabric or non-woven material (28).

5. Cold storage system as claimed in claim 4, **characterised in that** the storage medium carrier (14) is a preferably hydrophilic fibre material.

6. Cold storage system as claimed in one of the preceding claims, **characterised in that** the storage medium carrier (14) incorporates highly absorbent materials such as hydro-gels, colloids or so-called super-absorbent polymers or similar.

7. Cold storage system as claimed in one of the preceding claims, **characterised in that** the heat-conducting connection is provided in the form of fins (30), made from a material with a good thermal conductivity, for example aluminum.

8. Cold storage system as claimed in claim 7, **characterised in that** the fins (30) and the storage medium carrier (14) form a layered structure.

9. Heating or air-conditioning system of a motor vehicle with a cold storage system (10) as claimed in one of the preceding claims.

## Revendications

1. Accumulateur de froid, en particulier pour un véhicule automobile, comprenant un fluide accumulateur pour accumuler le froid et un porteur de fluide accumulateur (14), qui représente au sein de la liaison thermo-conductrice avec les fluides de conduction (16) un fluide caloporteur permettant de charger ou de purger l'accumulateur de froid (10), **caractérisé en ce que** le porteur de fluide accumulateur (14) se compose d'un matériau absorbant (28) et que le fluide accumulateur est intégralement absorbé à l'état liquide par le porteur du fluide accumulateur (14), dans lequel accumulateur, le porteur du fluide accumulateur (14) se compose d'un matériau fibreux.

2. Accumulateur de froid selon la revendication 1, **caractérisé en ce que** la proportion de fluide accumulateur absorbé s'élève entre 30 % en volume et 90 % en volume environ.

3. Accumulateur de froid selon la revendication. 1 ou 2 **caractérisé en ce que** le fluide accumulateur est de l'eau.

4. Accumulateur de froid selon l'une quelconque des revendications précédentes, **caractérisé en ce que** le porteur de fluide accumulateur (14) se compose d'une toile, d'une étoffe ou de non-tissé (28).

5. Accumulateur de froid selon la revendication 4, **caractérisé en ce que** le porteur de fluide accumulateur (14) se compose de matériau fibreux de préférence hydrophile.

6. Accumulateur de froid selon l'une quelconque des revendications précédentes, **caractérisé en ce que** le porteur de fluide accumulateur (14) présente des matériaux fortement absorbants, tels que des hydrogels, des colloïdes ou des polymères dits superabsorbants ou leurs analogues.

7. Accumulateur de froid selon l'une quelconque des revendications précédentes, **caractérisé en ce que** la liaison thermo-conductrice est réalisée au moyen de nervures (30), qui se composent d'un bon matériau thermo-conducteur, par exemple l'aluminium.

8. Accumulateur de froid selon la revendication 7 **caractérisé en ce que** les nervures et le porteur de fluide accumulateur (14) forment une structure en couches.

9. Système de climatisation ou de chauffage d'un véhicule automobile pourvu d'un accumulateur de froid (10) selon l'une quelconque des revendications précédentes.
